# EUROPEAN PATENT SPECIFICATION

(11) **EP 1 124 742 B1**
(45) Date of publication and mention of the grant of the patent: **29.12.2004**
(21) Application number: 99968658.7
(22) Date of filing: 27.08.1999
(51) Int. Cl.: B65G 1/04, B66F 9/14

(54) **AUTOMATIC STORING ARRANGEMENT AND CARRIER MEANS THEREOF**
AUTOMATISCHE LAGEREINRICHTUNG UND SEIN TRANSPORTMITTEL
INSTALLATION DE STOCKAGE AUTOMATIQUE ET SON SYSTEME PORTEUR

(30) Priority: 04.09.1998 SE 9803021
(43) Date of publication of application: 22.08.2001
(73) Proprietor: MOVING AB, 265 82 Astorp (SE)
(72) Inventor: BERG, Ulf, S-461 91 Trollhättan (SE); TURESSON, Per, S-465 95 Grästorp (SE)
(74) Representative: Berglund, Gustav Arthur
(86) International application number: PCT/SE1999/001467
(87) International publication number: WO 2000/013991

(56) References cited:
- EP-A1- 0 749 915
- DE-A1- 4 235 576
- DE-A1- 19 532 641
- GB-A- 777 989
- GB-A- 1 416 257
- GB-A- 1 449 266

## Description

### Technical Field

The present invention relates to an automatic storing arrangement or storage automate for handling and storing goods-supporting elements, such as pallets or trays, comprising storage shelves, a carriage and a carrier means, said carrier means being supported by the carriage and comprising handling means for delivering and fetching a goods-supporting element on the respective storage shelves, the carriage and the carrier means being so arranged that the carrier means is movable to the various storage shelves. The invention also relates to a carrier means for such an automatic storing arrangement.

### Background of the Invention

An automatic storing arrangement of the above-described type normally comprises storage shelves, which are divided into two rows, which between themselves form a path. The carriage is movable along the path and the carrier means which is supported by the carriage is movable in the vertical and lateral directions in relation to the direction of travel of the carriage. The carrier means is thus displaceable to and into the various storage shelves, on which the goods-supporting elements are delivered and from which they are fetched with the aid of the handling means. The automatic storing arrangement is normally controlled by a computer, which records on which storage shelf the respective goods-supporting elements are stored, whereby the goods-supporting elements may be fetched from the storage shelves in optional order. Such an automatic storing arrangement is for example known from DE 42 35 576.

The storage shelves normally comprise projections, which form rest surfaces for the lateral edges of the elements.

According to prior-art technique, an element supported by the carrier means can be delivered to such a shelf, for instance, by inserting the carrier means into the shelf and subsequently lowering the carrier means, whereby the lateral edges of the element are placed on the projections and thus lifted off the carrier means. The element is fetched by a reversed process. The advantage of this variant is that the elements need not have any particular design to allow delivering/fetching, except that they must project from the sides of the carrier means. However, the variant has a number of drawbacks. A first drawback is that the carrier means must be inserted into the respective storage shelves. This displacement takes time, and thus has an influence on the working speed of the automatic storing arrangement. Furthermore, when delivering an element the carrier means must be lowered through the storage shelf to a position under the same. The carrier means must also be moved to this position and then raised to fetch an element. The shelves must therefore be separated in the vertical direction by a distance which allows the insertion of the carrier means. As a result, the space is poorly used. Finally, the moment stress in the carriage and the carrier means supported by the same is considerable when the carrier means is situated in its outermost position inside a shelf while supporting an element. This constitutes a problem, in particular if the weight of the element is considerable.

As an alternative, cylinders may be used to perform said delivering/fetching. The advantage of cylinders is that the carrier means only needs to be arranged adjacent to the shelves and not inserted into the same when delivering/fetching. As a result, the required displacement of the carrier means is reduced, which increases the working speed of the automatic storing arrangement. A further advantage of this variant is that the underside of the storage shelf does not need to be accessible, and therefore the storage shelves can be arranged in a more compact manner. To allow the fetching of an element from such a shelf, the element must, however, comprise a grip means, with which the cylinder can engage to pull the element onto the carrier means. The grip means normally projects, and thus reduces the possibility of packing the elements, which is important, for instance, in transport. The grip means also leads to a higher production cost of the goods-supporting element.

Grip means may also be engaged by projecting drivers on an endless drive means according to what is known from DE 195 32 641 or by drivers that are moved between two different positions by an actuating means according to what is known from GB 1 449 266.

A further alternative is to arrange a conveyor belt on the carrier means. This means that an element can be delivered by arranging the carrier means immediately adjacent to a shelf. Subsequently, the conveyor belt is driven in a suitable direction, whereby the element is 'wound off' onto the shelf. To fetch an element, it is, however, necessary to move the carrier means at least a distance under the shelf and then raise the same to arrange a part of the element on the conveyor belt. The element can then be 'wound' onto the carrier means. Thus problems arise again, caused by a non-compact storage as well as a certain amount of moment stress in fetching. If the element should weigh too much, sliding problems may also occur in fetching.

Therefore, an automatic storing arrangement must be adjusted to the type of goods-supporting elements which are to be handled and stored. If the goods supported by the element are heavy, a grip means is usually arranged on the element, with which the handling means of the carrier means engages to allow delivering/fetching. If it is important for the elements to be packed in a space-saving manner, for instance during transport, they are formed without said grip means, and if the elements do not weigh too much, the conveyor belt may, for instance, be used for the handling thereof.

However, it is often necessary to handle and store element types both with and without grip means, and for this reason several types of automatic storing arrangements must be installed, which, of course, results in excessive costs.

A first object of the invention is to provide a versatile automatic storing arrangement, which allows the handling and storage of various types of goods-supporting elements in a cost-effective manner.

A second object of the present invention is to provide a carrier means for an automatic storing arrangement, said carrier means allowing the handling of various types of goods-supporting elements.

### Summary of the Invention

According to the present invention, the first object is achieved by an automatic storing arrangement having the features stated in claim 1. Preferred embodiments of the automatic storing arrangement are defined in claims 2-10.

According to the present invention, the second object is achieved by a carrier means having the features stated in claim 11. Preferred embodiments of the carrier means are defined in claims 12-13.

More specifically, the invention relates to an automatic storing arrangement for handling elements, such as goods or goods-supporting elements in the form of pallets or trays, said automatic storing arrangement comprising storage shelves, a carriage and a carrier means, said carrier means being supported by the carriage and comprising handling means for delivering and fetching an element on the respective storage shelves, the carriage and the carrier means being so arranged that the carrier means is movable to the various storage shelves. The storage shelves form a first section, in which two storage shelves, which are adjacent in the vertical direction, are separated by a first distance, which is at least equal to the sum of the height of a goods-supporting element and the height of the carrier means, to allow storage of a goods-supporting element on the lower of said shelves and insertion of the carrier means into said lower shelf for access to the underside of an element stored on the superposed shelf. The carriage and the carrier means are so arranged that the carrier means is also movable into the storage shelves of the first section. The handling means comprises a first separate transport means, which is drivable in two opposite directions and which is adapted for engagement with the undersides of the elements for delivering and fetching the elements on the storage shelves in said first section. The automatic storing arrangement is characterised in that the storage shelves also form a second section, in which the storage shelves are arranged in a compact manner in the vertical direction and in which two storage shelves, which are adjacent in the vertical direction, are separated by a second distance, which is at least equal to the height of a goods-supporting element, to allow storage of an element on the respective shelves, and the handling means also comprises a second separate transport means, which is drivable in said opposite directions and which is adapted for engagement with one or more of the four sides other than the underside or the upper side of an element for delivering and fetching the elements on the storage shelves in said second section.

This results in an automatic storing arrangement which allows the handling of various types of goods-supporting elements. Such an element can be handled by driving the first transport means, which engages with the underside of the element, or with the aid of the second transport means, which engages with a side of the element, that is a side which does not constitute an underside or an upper side of the element. Consequently, one and the same automatic storing arrangement can handle both elements with and those without grip means. Due to the versatility of the automatic storing arrangement it is not necessary to install various automatic storing arrangements for different types of goods-supporting elements, which results in a substantial saving in costs.

In order to deliver an element to a storage shelf with the aid of one of the transport means, the carrier means is moved to a position adjacent to the storage shelf in question. After that, the transport means is driven in a suitable direction. In the case of the first transport means, it will engage with the underside of the element and insert the same onto the shelf. In the case of the second transport means, it will engage with a side of the element and thus push the same onto the shelf.

A computer unit of the automatic storing arrangement may be used to ensure that a goods-supporting element is stored on a storage shelf in the intended shelf section.

Goods-supporting elements which are intended to be handled by the first transport means are stored in the section of storage shelves which are separated in the vertical direction by said distance, and in order to fetch such an element from a storage shelf with the aid of the first transport means, it is necessary to insert the first transport means a distance under the storage shelf in question and then raise the same so that a part of the underside of the element will contact the transport means. Subsequently, the first transport means can be driven in a suitable direction to move the entire element to the carrier means.

The goods-supporting elements which are intended to be handled by the second transport means are stored in the section intended for this purpose, i.e. the section whose storage shelves are arranged in a compact manner in the vertical direction, and when fetching an element with the aid of the second transport means, the carrier means must be moved to a position adjacent to the shelf and the element must have a grip means, with which the second transport means can engage to pull the element onto the carrier means.

Preferably, the two transport means of the handling means are separately drivable.

According to one embodiment, the first transport means comprises portions which are arranged in the support surface of the carrier means and which, during operation of the first transport means, engage with the underside of a goods-supporting element arranged on the support surface of the carrier means. The portions preferably consist of one or more endless belts.

According to another embodiment, the first transport means consists of a plurality of rollers, which are arranged in parallel and which are drivable for delivering/fetching elements.

According to yet another embodiment of the invention, the second transport means comprises portions which are extendable from the support surface of the carrier means and which, in their extending state during operation, engage with a side of a goods-supporting element arranged on or immediately adjacent to the support surface of the carrier means. Preferably, the second transport means consists of at least one endless drive means, which runs round two shafts which are arranged in parallel at opposite sides of the carrier means, said extending portions consisting of at least one projecting driver, which by operating the drive means is movable to a position projecting from the support surface of the carrier means.

Preferably, the carriage is laterally movable in relation to the storage shelves.

Preferably, the carrier means is vertically movable in relation to the storage shelves.

Preferably, the carrier means is movable perpendicularly to a plane defined by the vertical and lateral extent of the storage shelves.

Finally, according to the invention a carrier means for an automatic storing arrangement is provided, comprising a handling means for handling goods-supporting elements, wherein said handling means comprises a first transport means which is drivable in two opposite directions and which is adapted for engagement with the underside of such a goods-supporting element arranged on the carrier means, and a second transport means which is drivable in said opposite directions and which is adapted for engagement with a side other than the underside or the upper side of such an element arranged on or adjacent to the carrier means. The second transport means consists of at least one endless drive means, which runs round two shafts which are arranged in parallel at opposite sides of the carrier means, said drive means comprising projecting drivers, which by operating the drive means are movable to a position projecting from a support surface of the carrier means and which in theirs projecting state during operation, are able to engage with a side other than the underside or the upper side of a goods-supporting element which is arranged on or immediately adjacent to the support surface of the carrier means. The carrier means is characterised in that the first and second transport means are two separate means allowing the handling of two different types of goods-supporting elements.

It goes without saying that the above-mentioned embodiments and features of the automatic storing arrangement according to the present invention may be combined in optional manner.

Below, a preferred embodiment of the invention will be described as an example with reference to the accompanying figures.

### Brief Description of the Drawings

Fig. 1 is an overall view of an automatic storing arrangement according to the present invention.
Fig. 2 is a side view of a system for lateral displacement of a table of a carrier means according to the present invention.
Fig. 3 is a plan view of the carrier means in Fig. 2.
Fig. 4 is a side view of a first transport means of a carrier means according to the present invention.
Fig. 5 is a plan view of the carrier means in Fig. 4.
Fig. 6 is a side view of a second transport means of a carrier means according to the present invention.
Fig. 7 is a plan view of the carrier means in Fig. 6.
Fig. 8 is a schematic side view showing the delivering of a goods-supporting element with the aid of the first transport means on a storage shelf intended for this purpose.
Fig. 9 is a schematic side view showing the delivering of a goods-supporting element with the aid of the second transport means on a storage shelf intended for this purpose.
Fig. 10 is a schematic side view showing the fetching of a goods-supporting element with the aid of the first transport means from a storage shelf intended for this purpose.
Fig. 11 is a schematic side view showing the fetching of a goods-supporting element with the aid of the second transport means from a storage shelf intended for this purpose.

### Description of Embodiments

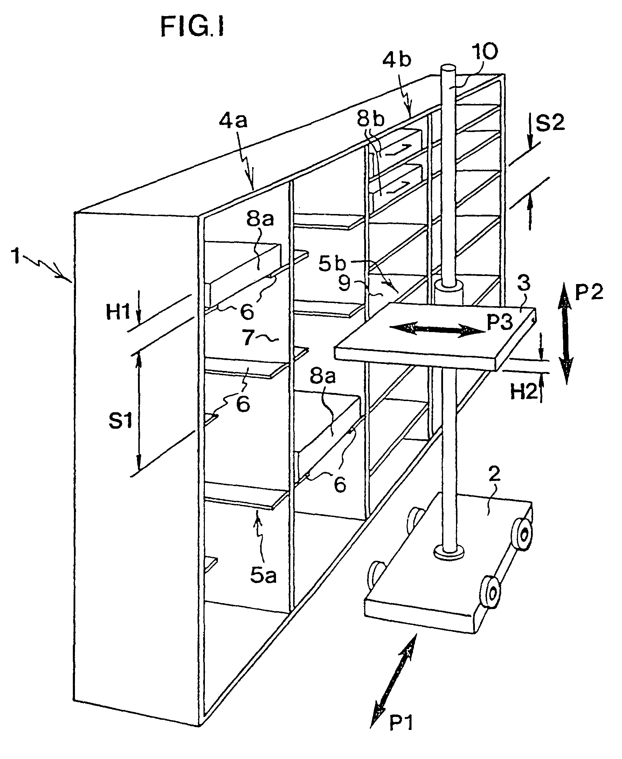

Reference is made to Fig. 1, which shows an embodiment of the automatic storing arrangement according to the present invention. The automatic storing arrangement comprises a shelf unit 1, a carriage 2 and a carrier means 3. The shelf unit 1 is divided into two sections 4a and 4b, a first shelf section 4a comprising storage shelves 5a which are separated in the vertical direction by a distance S1, the distance S1 at least being equal to the sum of the height H1 of a goods-supporting element 8a and the height H2 of the carrier means 3, and a second shelf section 4b, whose storage shelves 5b are separated in the vertical direction by a distance S2, which is at least equal to the height H1 of a goods-supporting element 8b. Two supporting projections 6 are mounted on different lateral surfaces 7 of the respective storage shelves 5a in the first section 4a. A goods-supporting element 8a which is placed on such a storage shelf 5a is thus supported by the supporting projections 6 while being accessible from the underside by the carrier means 3, said distance S1 being so adjusted as to allow insertion of the carrier means 3. The storage shelves 5b in the second section 4b have support surfaces 9, which are continuous, as they do not need to be accessible from the underside by the carrier means 3 for reasons that will be explained below. It is, of course, possible to use supporting projections 6 also in this section 4b, if desired.

The carriage 2 is movable in the direction indicated by the arrow P1 and carries the support means 3 with the aid of a column 10. The carrier means 3 is movable along the column 10 in the direction P2 and may also be laterally moved in the direction P3. As a result, the carrier means 3 can be displaced to the desired position in relation to the various storage shelves 5a and 5b.

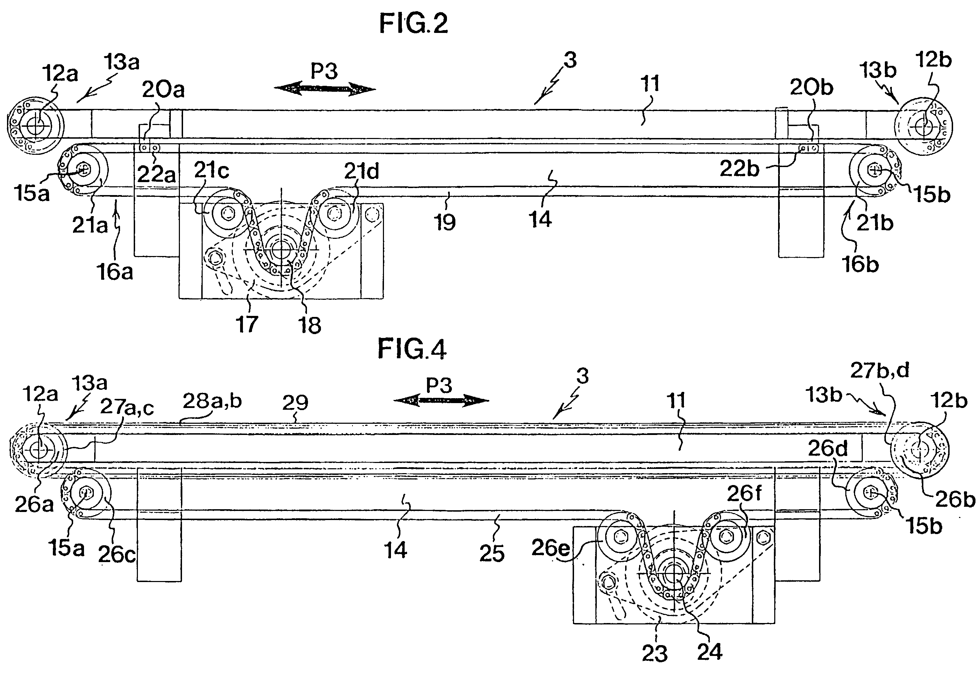

Figs 2-7 show a carrier means 3 according to the present invention. The carrier means 3 comprises a table 11, and a first shaft 12a and a parallel second shaft 12b are freely supported at a first side 13a and a second side 13b, respectively, of the table 11. The table 11 is supported by and slidingly arranged in the direction P3 on a frame 14, which is supported by the carriage 2 shown in Fig. 1. A first shaft 15a and a parallel second shaft 15b are mounted at a first side 16a and a second side 16b, respectively, of the frame 14. Furthermore, the carrier means 3 comprises a drive system for lateral displacement in the direction P3 of the table 14 and a handling means for the goods-supporting elements 8a and 8b.

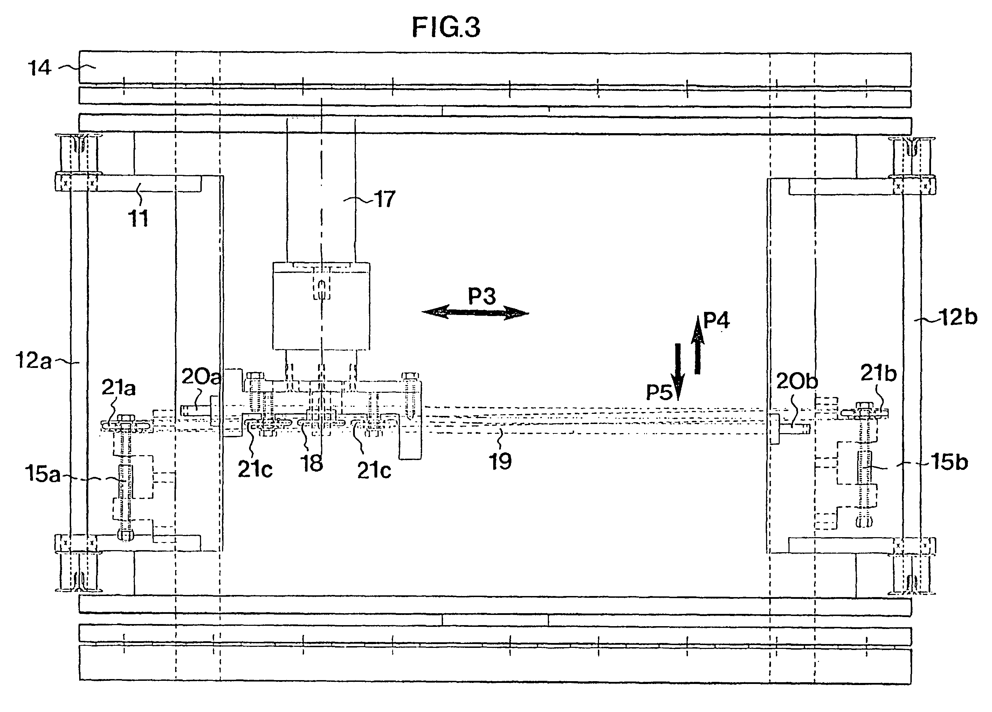

The drive system for the displacement of the table 11, which drive system is shown in Figs 2 and 3, comprises a motor 17 with a driving wheel 18, a chain 19, two attachments 20a and 20b and four deflecting wheels 21a-d. The motor 17 is mounted on the frame 14. A first deflecting wheel 21a is freely supported on the first shaft 15a of the frame 14 and a second deflecting wheel 21b is freely supported on the second shaft 15b thereof. In addition, a third deflecting wheel 21c and a fourth deflecting wheel 21d are freely supported by the frame 14 in connection with and on different sides of the driving wheel 18. The deflecting wheels 21a-d and the driving wheel 18 are relatively displaced in the vertical direction, the driving wheel 18 being located lowest and the first and the second deflecting wheels 21a and 21b being located uppermost on the same level. In addition, a first attachment 20a is mounted on the first side 13a of the table 11 and a second attachment 20b is mounted on the second opposite side 13b of the table 11. An end 22a of the chain 19 is fixed in the first attachment 20a, from which the chain 19 extends to and 180° round the second deflecting wheel 21b, to and over the fourth deflecting wheel 21d, to and under the driving wheel 18, to and over the third deflecting wheel 21c, to and 180° round the first deflecting wheel 21a and finally to the second attachment 20b, in which a second end 22b of the chain 19 is fixed. The first attachment 20a and the second deflecting wheel 21b are somewhat displaced in depth in the direction P4 and the second attachment 20b and the first deflecting wheel 21a are somewhat displaced in depth in the direction P5. The displacements are necessary for the chain 19 not to collide with itself along its extent.

By driving the driving wheel 18 in either direction, the table 11 can be made to move in one or the other direction since one of the chain ends 22a-b then pulls the corresponding attachment 20a-b, whereby the table 11 is displaced thanks to the sliding arrangement of the same and the frame 14.

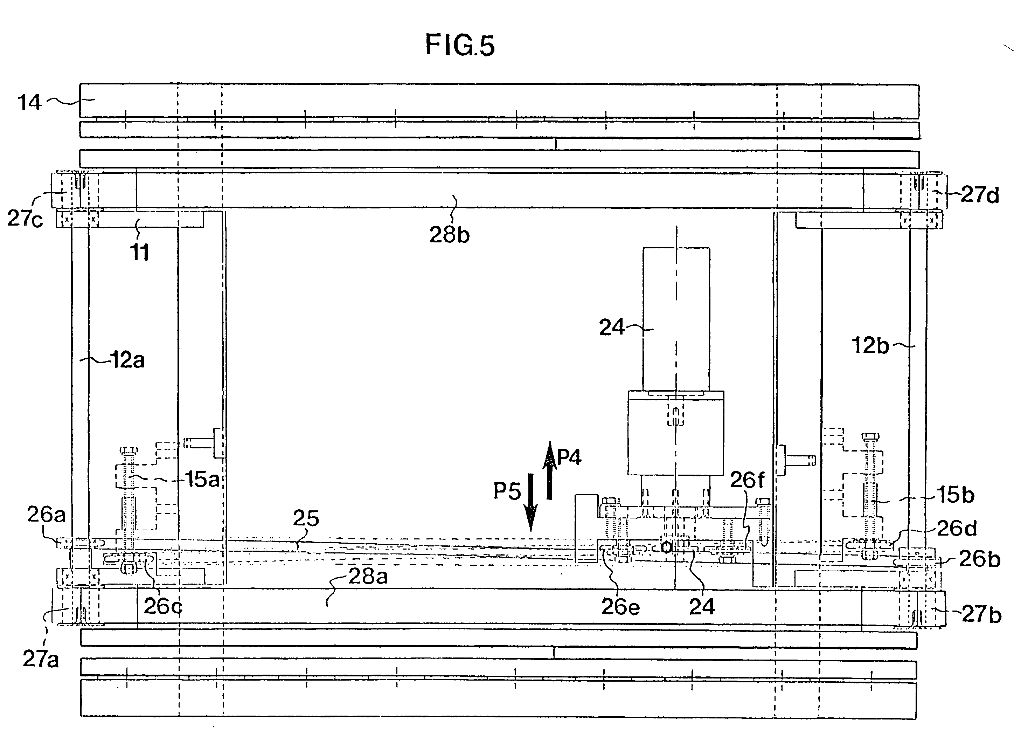

A first transport means of the handling means is shown in Figs 4 and 5. The first transport means is adapted to engage with the underside of the goods-supporting elements 8a which are shown in Fig. 1, and comprises a motor 23 with a driving wheel 24, an endless chain 25, six deflecting wheels 26a-f, four belt wheels 27a-d and two endless belts 28a-b. The belt wheels 27a-d are fixedly mounted each in one end of the first shaft 12a and the second shaft 12b, respectively, of the table 11. The belts 28a-b each run over two 27a-b and 27c-d, respectively, of the belt wheels from one side 13a to the other side 13b of the table 11. The belts 28a-b are thus drivable in unison by rotating one of the shafts 12b. Furthermore, the belts 28a-b are so arranged on the table 11 that a goods-supporting element 8a-b placed on the table 11 contacts the upper side of an upper run 29 of the respective belts 28a-b. The first shaft 12a also supports a first deflecting wheel 26a which is freely supported while the second shaft 12b supports a second deflecting wheel 26b which is rigidly connected thereto. A third deflecting wheel 26c and a fourth deflecting wheel 26d are freely supported on the first shaft 15a and the second shaft 15b, respectively, of the frame 14. A fifth deflecting wheel 26e and a sixth deflecting wheel 26f are mounted adjacent to the driving wheel 24. The chain 25 extends in an endless loop from the first deflecting wheel 26a, to and 180° round the second deflecting wheel 26b, to and 180° round the third deflecting wheel 26c, to and over the fifth deflecting wheel 26e, to and under the driving wheel 24, to and over the sixth deflecting wheel 26f, to and 180° round the fourth deflecting wheel 26d and finally to and 180° round the first deflecting wheel 26a. The first deflecting wheel 26a and the fourth deflecting wheel 26d are displaced in depth in the direction P4 and the third deflecting wheel 26c and the second deflecting wheel 26b are somewhat displaced in depth in the direction P5. The displacements are necessary for the chain 25 not to collide with itself along its extent.

By driving the motor 23 in one of the directions, the second shaft 12b of the table 11 can be rotated to drive the belts 28a-b in the desired direction. The design of the first transport means is such that it can be driven irrespective of the position of the table 11 in relation to the frame 14.

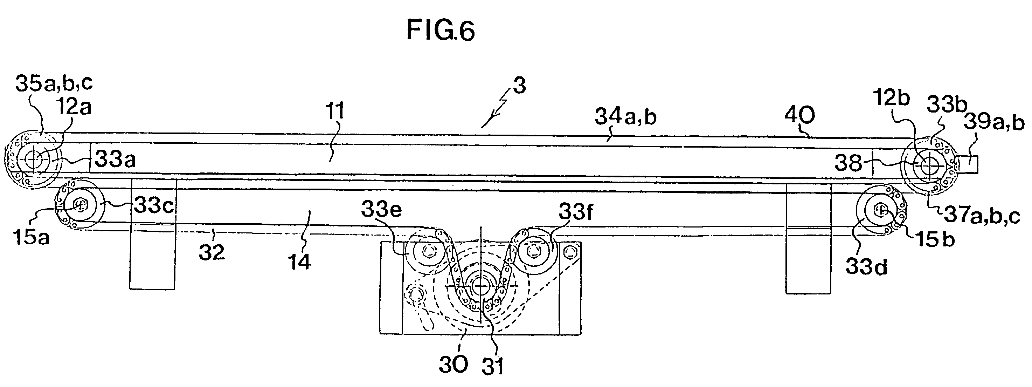

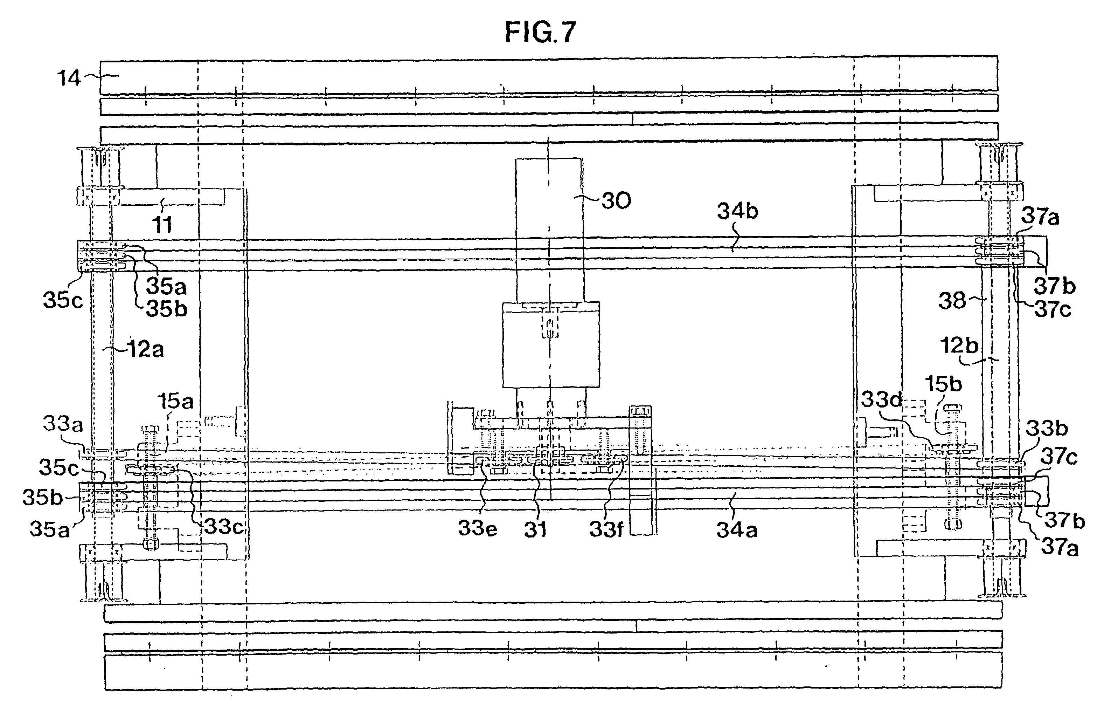

A second transport means of the handling means is shown in Figs 6 and 7. This transport means is adapted to engage with a side of the elements, which are shown in Fig. 1 and which comprise a grip means, and is designed essentially in the same manner as the above-mentioned first transport means with a motor 30 with a driving wheel 31, a chain 32 and six deflecting wheels 33a-f. However, this transport means comprises, instead of the endless belts 28a-b, two endless chain units 34a-b. The chain units 34a-b each run over three chain wheels 35a-c, which are mounted in the first shaft 12a of the table 11, and three chain wheels 37a-c, of which two 37a-b are mounted in the second shaft 12b of the table 11 and one 37c is rigidly connected to a shaft 38, which is concentrically mounted on the exterior of the second shaft 12b of the table 11. The deflecting wheels 33a-f of the transport means are arranged substantially in the same way as the deflecting wheels 21a-f of the first transport means, except that a deflecting wheel 33b, which corresponds to the second deflecting wheel 21b of the first transport means, is fixedly mounted on the exterior shaft 38. The chain units 34a-b are thus drivable in unison by rotating the exterior shaft 38. The chain units 34a-b each comprise a driver 39a-b and are arranged so that their upper loops 40 are located under the upper run 29 of the belts 28a-b and their drivers 39a-b, when brought to a position at the upper loop 40, extend above the belts 28a-b.

By driving the driving wheel 31, the drivers 39a-b can be moved to a position, which projects from the support surface of the table 11 and in which they can engage with the side or with a grip means 41 of an element 8b which is arranged on or immediately adjacent to the table 11. The drivers 39a-b can be operated irrespectively of the position taken by the table 11.

As a result, a carrier means 3 is provided, which comprises a system for laterally moving a table 11, a first transport means in the form of two endless belts 28a-b which engage with the underside of a goods-supporting element 8a, and a second transport means in the form of two chain units 34a-b each having a driver 39a-b engaging with a side of a goods-supporting element 8b. The system for moving the table 11 and the two transport means are all separately drivable.

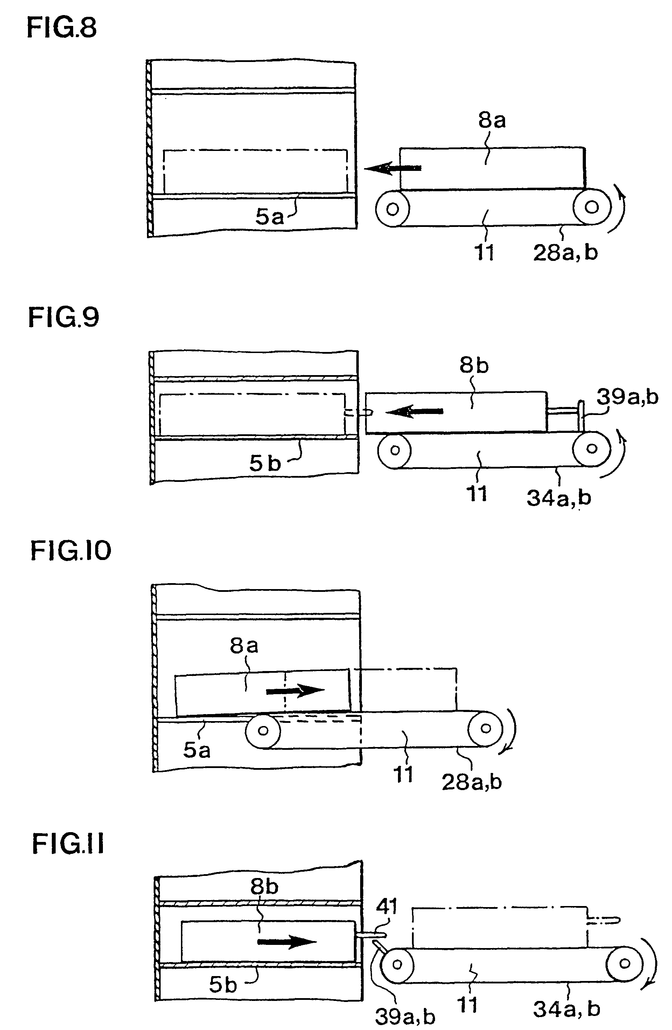

When using the automatic storing arrangement, a goods-supporting element 8a-b can be delivered onto a storage shelf 5a-b in one of the following ways:
(i) The table 11, which supports the goods-supporting element 8a, is moved to a position adjacent to a storage shelf 5a, see Fig. 8. The motor 23 for driving the belts 28a-b in a suitable direction is then started to transport the element 8a to the storage shelf 5a. As long as a part of the element 8a is in contact with the belts 28a-b, the element 8a will be 'wound' onto the shelf 5a. The final position of the element 8a is indicated by dashed lines.
(ii) The table 11, which supports the goods-supporting element 8b, is moved to a position adjacent to a storage shelf 5b, see Fig. 9. The motor 30 for driving the chain units 34a-b in a suitable direction is then started to press the element 8b by means of the drivers 39a-b out onto a storage shelf 5b. As long as the drivers 39a-b are in contact with the element 8b, the latter will be pressed out onto the shelf 5b. The final position of the element 8b is indicated by dashed lines.

A goods-supporting element 8a-b can be fetched in one of the following ways:
(i) The table 11 is moved to a position a distance under a storage shelf 5a, see Fig. 10. The table 11 is then raised, whereby an element 8a located on the storage shelf 5a contacts the belts 28a-b. Finally, the motor 23 is started to 'wind in' the element 8a. The final position of the element 8a is indicated by dashed lines.
(ii) The table 11 is moved to a position adjacent to a storage shelf 5b, see Fig. 11. After that, the motor 30 is started to drive the chain units 34a-b in a suitable direction, whereby their drivers 39a-b contact the grip means 41 of the element 8b and pull the same onto the table 11. The final position of the element 8b is indicated by dashed lines.

The advantage of the first transport means is that the goods-supporting elements 8a do not need any particular design to be handled.

The advantage of the second transport means is that the handling of goods-supporting elements 8b is possible without any risk of sliding and great moment stress. The fetching and delivering can also be carried out quickly as the table 11 only has to be laterally displaced a short distance.

It will be understood that modifications of the automatic storing arrangement are possible within the scope of the invention. For instance, it is possible to replace the described belts 28a-b of the first transport means by rollers, which are freely supported by the table 11. The rollers may be interconnected so that they can be made to rotate in a suitable direction by driving one of the rollers, whereby a goods-supporting element 8a can be rolled off/onto the table 11.

Other modifications are also feasible, and the scope of the invention is therefore only defined by the appended claims.

## Claims

1. An automatic storing arrangement for handling elements (8a, 8b), such as goods or goods-supporting elements in the form of pallets or trays,
comprising storage shelves (5a, 5b), a carriage (2) and a carrier means (3),
said carrier means (3) being supported by the carriage (2) and comprising handling means for delivering and fetching an element (8a, 8b) on the respective storage shelves (5a, 5b),
the carriage (2) and the carrier means (3) being so arranged that the carrier means (3) is movable to the various storage shelves (5a, 5b),
the storage shelves (5a, 5b) form
a first section (4a), in which two storage shelves (5a), which are adjacent in the vertical direction, are separated by a first distance (S1), which is at least equal to the sum of the height (H1) of a goods-supporting element (8a) and the height (H2) of the carrier means (3), to allow storage of a goods-supporting element (8a) on the lower of said shelves (5a) and insertion of the carrier means (3) into said lower shelf (5a) for access to the underside of an element (8a) stored on the superposed shelf (5a),
the carriage (2) and the carrier means (3) being so arranged that the carrier means (3) is also movable into the storage shelves of the first section (4a),
and the handling means comprises
a first separate transport means, which is drivable in two opposite directions and which is adapted for engagement with the undersides of the elements (8a) for delivering and fetching the elements on the storage shelves (5a) in said first section (4a),
**characterised in**
**that** the storage shelves (5a, 5b) also form
a second section (4b), in which the storage shelves (5b) are arranged in a compact manner in the vertical direction and in which two storage shelves, which are adjacent in the vertical direction, are separated by a second distance (S2), which is at least equal to the height (H2) of a goods-supporting element (8b), to allow storage of an element (8b) on the respective shelves (5b),
and the handling means also comprises
a second separate transport means, which is drivable in said opposite directions and which is adapted for engagement with one or more of the four sides other than the underside or the upper side of an element (8b) for delivering and fetching the elements on the storage shelves (5b) in said second section (4b).

2. An automatic storing arrangement as claimed in claim 1, **characterised in that** the two means of the handling means are separately drivable.

3. An automatic storing arrangement as claimed in claim 1 or 2, **characterised in that** the first transport means comprises portions (28a, 28b) which are arranged in a support surface (11) of the carrier means (3) and which, during operation of the first transport means, are able to engage with the underside of a goods-supporting element (8a) which is arranged on the support surface (11) of the carrier means (3).

4. An automatic storing arrangement as claimed in claim 3, **characterised in that** the first transport means comprises an endless belt (28a, 28b), which runs round two shafts (12a, 12b) which are arranged in parallel at opposite sides (13a, 13b) of the carrier means (3) and of which one shaft (12b) is operable for driving the belt (28a, 28b).

5. An automatic storing arrangement as claimed in claim 3, **characterised in that** the first transport means consists of a plurality of rollers, which are arranged in parallel and which are drivable for delivering/fetching the elements (8a).

6. An automatic storing arrangement as claimed in any one of the preceding claims, **characterised in that** the second transport means comprises portions (39a, 39b) which are extendable from a support surface (11) of the carrier means (3) and which, in their extending state during operation, are able to engage with a side of a goods-supporting element (8b) which is arranged on or immediately adjacent to the support surface (11) of the carrier means (3).

7. An automatic storing arrangement as claimed in claim 6, **characterised in that** the second transport means consists of at least one endless drive means (34a, 34b), which runs round two shafts (12a, 12b) which are arranged in parallel at opposite sides (13a, 13b) of the carrier means (3), said drive means (34a, 34b) comprising at least one projecting driver (39a, 39b), which by operating the drive means (34a, 34b) is movable to a position projecting from the support surface (11) of the carrier means (3).

8. An automatic storing arrangement as claimed in any one of the preceding claims, **characterised in that** the carriage (2) is laterally movable in relation to the storage shelves (5a, 5b).

9. An automatic storing arrangement as claimed in any one of the preceding claims, **characterised in that** the carrier means (3) is vertically movable in relation to the storage shelves (5a, 5b).

10. An automatic storing arrangement as claimed in any one of the preceding claims, **characterised in that** the carrier means (3) is movable perpendicularly to a plane defined by the vertical and lateral extent of the storage shelves (5a, 5b).

11. A carrier means for an automatic storing arrangement,
comprising a handling means for handling goods-supporting elements (8a, 8b),
wherein said handling means comprises
a first transport means which is drivable in two opposite directions and which is adapted for engagement with the underside of such a goods-supporting element (8a) arranged on the carrier means (3), and
a second transport means which is drivable in said opposite directions and which is adapted for engagement with a side other than the underside or the upper side of such an element (8b) arranged on or adjacent to the carrier means (3),
the second transport means consists of at least one endless drive means (34a, 34b), which runs round two shafts (12a, 12b) which are arranged in parallel at opposite sides (13a, 13b) of the carrier means (3), said drive means (34a, 34b) comprising projecting drivers (39a, 39b), which by operating the drive means (34a, 34b) are movable to a position projecting from a support surface (11) of the carrier means (3) and which in theirs projecting state during operation, are able to engage with a side other than the underside or the upper side of a goods-supporting element (8b) which is arranged on or immediately adjacent to the support surface (11) of the carrier means (3)
**characterised in that** the first and second transport means are two separate means allowing the handling of two different types of goods-supporting elements (8a, 8b).

12. A carrier means as claimed in claim 11, **characterised in that** the first transport means comprises portions (28a, 28b) which are arranged in the support surface (11) of the carrier means (3) and which, during operation of the first transport means, are able to engage with the underside of a goods-supporting element (8a) which is arranged on the support surface (11) of the carrier means (3).

13. A carrier means as claimed in claim 12, **characterised in that** the first transport means comprises an endless belt (28a, 28b), which runs round two shafts (12a, 12b) which are arranged in parallel at opposite sides (13a, 13b) of the carrier means (3) and of which one shaft (12b) is operable for driving the belt (28a, 28b).

## Patentansprüche

1. Automatische Lagerungsanordnung zum Handhaben von Elementen (8a, 8b), wie beispielsweise Erzeugnissen oder Elementen zum Tragen von Erzeugnissen in Form von Paletten oder Schalen,
die Lagerablagen (5a, 5b), einen Wagen (2) und eine Trägereinrichtung (3) umfasst,
wobei die Trägereinrichtung (3) von dem Wagen (2) getragen wird und eine Handhabungseinrichtung zum Ablegen und Entnehmen eines Elementes (8a, 8b) auf den entsprechenden Lagerablagen (5a, 5b) umfasst,
der Wagen (2) und die Trägereinrichtung (3) so eingerichtet sind, dass die Trägereinrichtung (3) zu den verschiedenen Lagerauflagen (5a, 5b) bewegt werden kann,
wobei die Lagerauflagen (5a, 5b) bilden:
einen ersten Abschnitt (4a), in dem zwei Lagerauflagen (5a), die in der vertikalen Richtung aneinandergrenzen, um einen ersten Abstand (S1) getrennt sind, der wenigstens der Summe der Höhe (H1) eines Elementes (8a) zum Tragen von Erzeugnissen und der Höhe (H2) der Trägereinrichtung (3) entspricht, um das Lagern eines Elementes (8a) zum Tragen von Erzeugnissen auf der unteren der Ablagen (5a) und das Einführen der Trägereinrichtung (3) in die untere Ablage (5a) zum Zugang zur Unterseite eines Elementes (8a) zu ermöglichen, das auf der darüber befindlichen Ablage (5a) gelagert wird,
der Wagen (2) und die Trägereinrichtung (3) so angeordnet sind, dass die Trägereinrichtung (3) auch in die Lagerablagen des ersten Abschnitts (4a) hineinbewegt werden kann,
und die Handhabungseinrichtung umfasst:
eine erste separate Transporteinrichtung, die in zwei einander entgegengesetzten Richtungen angetrieben werden kann und die zum Eingriff mit den Unterseiten der Elemente (8a) eingerichtet ist, um die Elemente auf den Lagerablagen (5a) in dem ersten Abschnitt (4a) abzulegen und zu entnehmen,
**dadurch gekennzeichnet, dass**:
die Lagerablagen (5a, 5b) des Weiteren einen zweiten Abschnitt (4b) bilden, in dem die Lagerablagen (5b) in der vertikalen Richtung kompakt angeordnet sind, und in dem zwei Lagerablagen, die in der vertikalen Richtung aneinandergrenzen, um einen zweiten Abstand (S2) getrennt sind, der wenigstens der Höhe (H2) eines Elementes (8b) zum Tragen von Erzeugnissen entspricht, um das Lagern eines Elementes (8b) auf den entsprechenden Ablagen (5b) zu ermöglichen,
und die Handhabungseinrichtung des Weiteren umfasst:
eine zweite separate Transporteinrichtung, die in den einander entgegengesetzten Richtungen angetrieben werden kann und die zum Eingriff mit einer oder mehreren anderen der vier Seiten als der Unterseite oder der Oberseite eines Elementes (8b) eingerichtet ist, um die Elemente auf den Lagerablagen (5b) in dem zweiten Abschnitt (4b) abzulegen und zu entnehmen.

2. Automatische Lagerungsanordnung nach Anspruch 1, **dadurch gekennzeichnet, dass** die zwei Einrichtungen der Handhabungseinrichtung separat angetrieben werden können.

3. Automatische Lagerungsanordnung nach Anspruch 1 oder 2, **dadurch gekennzeichnet, dass** die erste Transporteinrichtung Teile (28a, 28b) umfasst, die in einer Tragefläche (11) der Trägereinrichtung (3) angeordnet sind und die während der Funktion der ersten Transporteinrichtung in der Lage sind, mit der Unterseite eines Elementes (8a) zum Tragen von Erzeugnissen in Eingriff zu kommen, das auf der Tragefläche (11) der Trägereinrichtung (3) angeordnet ist.

4. Automatische Lagerungsanordnung nach Anspruch 3, **dadurch gekennzeichnet, dass** die erste Transporteinrichtung ein Endlosband (28a, 28b) umfasst, das um zwei Wellen (12a, 12b) herumläuft, die parallel an einander gegenüberliegenden Seiten (13a, 13b) der Trägereinrichtung (3) angeordnet sind und von denen eine Welle (12b) zum Antreiben des Bandes (28a, 28b) betrieben werden kann.

5. Automatische Lagerungsanordnung nach Anspruch 3, **dadurch gekennzeichnet, dass** die erste Transporteinrichtung aus einer Vielzahl von Walzen besteht, die parallel angeordnet sind und zum Ablegen/Entnehmen der Elemente (8a) angetrieben werden können.

6. Automatische Lagerungsanordnung nach einem der vorangehenden Ansprüche, **dadurch gekennzeichnet, dass** die zweite Transporteinrichtung Teile (39a, 39b) umfasst, die von einer Tragefläche (11) der Trägereinrichtung (3) ausgefahren werden können und die in ihrem ausgefahrenen Zustand in Funktion in der Lage sind, mit einer Seite eines Elementes (8b) zum Tragen von Erzeugnissen in Eingriff zu kommen, das auf der Tragefläche (11) der Trägereinrichtung (3) oder unmittelbar daran angrenzend angeordnet ist.

7. Automatische Lagerungsanordnung nach Anspruch 6, **dadurch gekennzeichnet, dass** die zweite Transporteinrichtung aus wenigstens einer Endlos-Antriebseinrichtung (34a, 34b) besteht, die um zwei Wellen (12a, 12b) herumläuft, die parallel an einander gegenüberliegenden Seiten (13a, 13b) der Trägereinrichtung (3) angeordnet sind, wobei die Antriebseinrichtung (34a, 34b) wenigstens einen vorstehenden Mitnehmer (39a, 39b) umfasst, der durch Betätigen der Antriebseinrichtung (34a, 34b) an eine Position bewegt werden kann, die von der Tragefläche (11) der Trägereinrichtung (3) vorsteht.

8. Automatische Lagerungsanordnung nach einem der vorangehenden Ansprüche, **dadurch gekennzeichnet, dass** der Wagen (2) in Bezug auf die Lagerablagen (5a, 5b) seitlich bewegt werden kann.

9. Automatische Lagerungsanordnung nach einem der vorangehenden Ansprüche, **dadurch gekennzeichnet, dass** die Trägereinrichtung (3) in Bezug auf die Lagerablagen (5a, 5b) vertikal bewegt werden kann.

10. Automatische Lagerungsanordnung nach einem der vorangehenden Ansprüche, **dadurch gekennzeichnet, dass** die Trägereinrichtung (3) senkrecht zu einer Ebene bewegt werden kann, die durch die vertikale und die seitliche Ausdehnung der Lagerablagen (5a, 5b) definiert wird.

11. Trägereinrichtung für eine automatische Lagerungsanordnung,
die eine Handhabungseinrichtung zum Handhaben von Elementen (8a, 8b) zum Tragen von Erzeugnissen umfasst,
wobei die Handhabungseinrichtung umfasst:
eine erste Transporteinrichtung, die in zwei einander entgegengesetzten Richtungen angetrieben werden kann und die zum Eingriff mit der Unterseite eines Elementes (8a) zum Tragen von Erzeugnissen eingerichtet ist, das auf der Trägereinrichtung (3) angeordnet ist, und
eine zweite Transporteinrichtung, die in den einander entgegengesetzten Richtungen angetrieben werden kann und die zum Eingriff mit einer anderen Seite als der Unterseite oder der Oberseite des Elementes (8b) eingerichtet ist, das auf der Trägereinrichtung (3) oder daran angrenzend angeordnet ist,
wobei die zweite Transporteinrichtung aus wenigstens einer Endlos-Antriebseinrichtung (34a, 34b) besteht, die um zwei Wellen (12a, 12b) herumläuft, die parallel an einander gegenüberliegenden Seiten (13a, 13b) der Trägereinrichtung (3) angeordnet sind, wobei die Antriebseinrichtung (34a, 34b) vorstehende Mitnehmer (39a, 39b) umfasst, die durch Betätigen der Antriebseinrichtung (34a, 34b) an eine Position bewegt werden können, die von einer Tragefläche (11) der Trägereinrichtung (3) vorsteht, und die in ihrem vorstehenden Zustand in Funktion in der Lage sind, mit einer anderen Seite als der Unterseite oder der Oberseite eines Elementes (8b) zum Tragen von Erzeugnissen in Eingriff zu kommen, das auf der Tragefläche (11) der Trägereinrichtung (3) oder unmittelbar daran angrenzend angeordnet ist,
**dadurch gekennzeichnet, dass** die erste und die zweite Transporteinrichtung zwei separate Einrichtungen sind, die das Handhaben von zwei verschiedenartigen Elementen (8a, 8b) zum Tragen von Erzeugnissen ermöglichen.

12. Trägereinrichtung nach Anspruch 11, **dadurch gekennzeichnet, dass** die erste Transporteinrichtung Teile (28a, 28b) umfasst, die in der Tragefläche (11) der Trägereinrichtung (3) angeordnet sind und die während des Betriebes der ersten Transporteinrichtung in der Lage sind, mit der Unterseite eines Elementes (8a) zum Tragen von Erzeugnissen in Eingriff zu kommen, das auf der Tragefläche (11) der Trägereinrichtung (3) angeordnet ist.

13. Trägereinrichtung nach Anspruch 12, **dadurch gekennzeichnet, dass** die erste Transporteinrichtung ein Endlosband (28a, 28b) umfasst, das um zwei Wellen (12a, 12b) herumläuft, die parallel an einander gegenüberliegenden Seiten (13a, 13b) der Trägereinrichtung (3) angeordnet sind und von denen eine Welle (12b) zum Antreiben des Bandes (28a, 28b) betrieben werden kann.

## Revendications

1. Installation de stockage automatique destinée à manier des éléments (8a, 8b), tels que des produits ou des éléments supports de produits sous la forme de palettes ou plateaux,
comprenant des tablettes de stockage (5a, 5b), un chariot (2) et un moyen porteur (3),
ledit moyen porteur (3) étant supporté par le chariot (2) et comprenant des moyens de manutention destinés à emmener et aller chercher un élément (8a, 8b) sur les tablettes de stockage respectives (5a, 5b),
le chariot (2) et le moyen porteur (3) étant disposés de telle sorte que le moyen porteur (3) est mobile en direction des différentes tablettes de stockage (5a, 5b),
les tablettes de stockage (5a, 5b) forment
une première section (4a), dans laquelle deux tablettes de stockage (5a), adjacentes dans la direction verticale, sont séparées d'une première distance (S1), qui est au moins égale à la somme de la hauteur (H1) d'un élément support de produits (8a) et la hauteur (H2) du moyen porteur (3), afin de permettre le stockage d'un élément support de produits (8a) sur la plus basse desdites tablettes de stockage (5a) et l'insertion du moyen porteur (3) dans ladite tablette inférieure (5a) pour un accès à la face inférieure d'un élément (8a) stocké sur la tablette superposée (5a),
le chariot (2) et le moyen porteur (3) étant disposés de telle sorte que le moyen porteur (3) est également mobile à l'intérieur des tablettes de stockage de la première section (4a),
et le moyen de manutention comprend
un premier moyen de transport séparé, entraînable dans deux directions opposées et adapté pour une mise en prise avec les faces inférieures des éléments (8a) pour emmener et aller chercher les éléments sur les tablettes de stockage (5a) dans ladite première section (4a),
**caractérisée en ce que**
les tablettes de stockage (5a, 5b) forment également une seconde section (4b), dans laquelle les tablettes de stockage (5b) sont disposées de manière compacte dans la direction verticale et dans laquelle deux tablettes de stockage, adjacentes dans la direction verticale, sont séparées d'une seconde distance (S2), qui est au moins égale à la hauteur (H2) d'un élément support de produits (8b), pour permettre le stockage d'un élément (8b) sur les tablettes respectives (5b),
et le moyen de manutention comprend également
un second moyen de transport séparé, entraînable dans lesdites directions opposées et adapté pour une mise en prise avec un ou plusieurs des quatre côtés autres que la face inférieure ou la face supérieure d'un élément (8b) pour emmener et aller chercher les éléments sur les tablettes de stockage (5b) dans ladite seconde section (4b).

2. Installation de stockage automatique selon la revendication 1, **caractérisée en ce que** les deux moyens du moyen de manutention sont entraînables séparément.

3. Installation de stockage automatique selon la revendication 1 ou 2, **caractérisée en ce que** le premier moyen de transport comprend des parties (28a, 28b) qui sont disposées dans une surface support (11) du moyen porteur (3) et qui, pendant le fonctionnement du premier moyen de transport, sont capables de se mettre en prise avec la face inférieure d'un élément support de produits (8a) qui est disposé sur la surface support (11) du moyen porteur (3).

4. Installation de stockage automatique selon la revendication 3, **caractérisée en ce que** le premier moyen de transport comprend une courroie sans fin (28a, 28b), qui court autour de deux arbres (12a, 12b) qui sont disposés en parallèle sur des côtés opposés (13a, 13b) du moyen porteur (3) et dont un arbre (12b) est actionnable pour entraîner la courroie (28a, 28b).

5. Installation de stockage automatique selon la revendication 3, **caractérisée en ce que** le premier moyen de transport consiste en une pluralité de rouleaux, qui sont disposés en parallèle et qui sont entraînables pour emmener/aller chercher les éléments (8a).

6. Installation de stockage automatique selon l'une quelconque des revendications précédentes, **caractérisée en ce que** le second moyen de transport comprend des parties (39a, 39b) qui sont extensibles à partir d'une surface support (11) du moyen porteur (3) et qui, à leur état d'extension pendant le fonctionnement, sont capables de se mettre en prise avec une face d'un élément support de produits (8b) disposé sur ou à proximité immédiate de la surface support (11) du moyen porteur (3).

7. Installation de stockage automatique selon la revendication 6, **caractérisée en ce que** le second moyen de transport consiste en au moins un moyen d'entraînement sans fin (34a, 34b), qui court autour de deux arbres (12a, 12b) qui sont disposés en parallèle, sur des côtés opposés (13a, 13b) du moyen porteur (3), ledit moyen d'entraînement (34a, 34b) comprenant au moins un moteur d'entraînement en saillie (39a, 39b), qui en actionnant le moyen d'entraînement (34a, 34b) est mobile vers une position en saillie à partir de la surface support (11) du moyen porteur (3).

8. Installation de stockage automatique selon l'une quelconque des revendications précédentes, **caractérisée en ce que** le chariot (2) est mobile latéralement par rapport aux tablettes de stockage (5a, 5b).

9. Installation de stockage automatique selon l'une quelconque des revendications précédentes, **caractérisée en ce que** le moyen porteur (3) est mobile verticalement par rapport aux tablettes de stockage (5a, 5b).

10. Installation de stockage automatique selon l'une quelconque des revendications précédentes, **caractérisée en ce que** le moyen porteur (3) est mobile perpendiculairement à un plan défini par l'amplitude verticale et latérale des tablettes de stockage (5a, 5b).

11. Moyen porteur pour une installation de stockage automatique, comprenant un moyen de manutention destiné à manier des éléments supports de produits (8a, 8b),
dans lequel ledit moyen de manutention comprend
un premier moyen de transport, entraînable dans deux directions opposées et adapté pour une mise en prise avec la face inférieure dudit élément support de produits (8a) agencé sur le moyen porteur (3), et
un second moyen de transport, entraînable dans lesdites directions opposées et adapté pour une mise en prise avec un côté autre que la face inférieure ou la face supérieure d'un tel élément (8b) disposé sur ou à proximité directe du moyen porteur (3),
le second moyen de transport consiste en au moins un moyen d'entraînement sans fin (34a, 34b), qui court autour de deux arbres (12a, 12b) qui sont disposés en parallèle sur des côtés opposés (13a, 13b) du moyen porteur (3), ledit moyen d'entraînement (34a, 34b) comprenant des moteurs d'entraînement en saillie (39a, 39b), qui en actionnant le moyen d'entraînement (34a, 34b) sont mobiles vers une position en saillie à partir d'une surface support (11) du moyen porteur (3) et qui, à leur état en saillie pendant le fonctionnement, sont capables de se mettre en prise avec un côté autre que la face inférieure ou la face supérieure d'un élément support de produits (8b) disposé sur ou à proximité immédiate de la surface support (11) du moyen porteur (3)
**caractérisé en ce que** le premier et le second moyen de transport sont deux moyens séparés permettant la manutention de deux types différents d'éléments supports de produits (8a, 8b).

12. Moyen porteur selon la revendication 11, **caractérisé en ce que** le premier moyen de transport comprend des parties (28a, 28b) disposées dans la surface support (11) du moyen porteur (3) et qui, pendant le fonctionnement du premier moyen de transport, sont capables de se mettre en prise avec la face inférieure d'un élément support de produits (8a) disposé sur la surface support (11) du moyen porteur (3).

13. Moyen porteur selon la revendication 12, **caractérisé en ce que** le premier moyen de transport comprend une courroie sans fin (28a, 28b), qui court autour de deux arbres (12a, 12b) qui sont disposés en parallèle sur des côtés opposés (13a, 13b) du moyen porteur (3) et dont un arbre (12b) est actionnable pour entraîner la courroie (28a, 28b).
